(19)

**Europäisches Patentamt**
**European Patent Office**
**Office européen des brevets**

(11) **EP 4 323 966 B1**

(12) **EUROPEAN PATENT SPECIFICATION**

(45) Date of publication and mention
of the grant of the patent:
**17.06.2026  Bulletin 2026/25**

(21) Application number: **22719119.4**

(22) Date of filing: **02.04.2022**

(51) International Patent Classification (IPC):
**G06T 11/10** (2026.01)      **G06T 13/00** (2011.01)

(52) Cooperative Patent Classification (CPC):
**G06T 11/10; G06T 13/00**

(86) International application number:
**PCT/US2022/023186**

(87) International publication number:
**WO 2022/221080 (20.10.2022 Gazette 2022/42)**

(54) **IMAGE ANIMATION**

BILDANIMATION

ANIMATION D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **16.04.2021   CN 202110412709**

(43) Date of publication of application:
**21.02.2024   Bulletin 2024/08**

(73) Proprietor: **Microsoft Technology Licensing, LLC
Redmond, WA 98052-6399 (US)**

(72) Inventors:
• **LIU, Bei**
**Redmond, Washington 98052-6399 (US)**
• **YANG, Huan**
**Redmond, Washington 98052-6399 (US)**
• **FU, Jianlong**
**Redmond, Washington 98052-6399 (US)**

(74) Representative: **Grünecker Patent- und
Rechtsanwälte
PartG mbB
Leopoldstraße 4
80802 München (DE)**

(56) References cited:
• YUKI ENDO ET AL: "Animating Landscape: Self-Supervised Learning of Decoupled Motion and Appearance for Single-Image Video Synthesis", ARXIV.ORG, CORNELL UNIVERSITY LIBRARY, 201 OLIN LIBRARY CORNELL UNIVERSITY ITHACA, NY 14853, 16 October 2019 (2019-10-16), XP081516298
• HONGWEI XUE ET AL: "Learning Fine-Grained Motion Embedding for Landscape Animation", ARXIV.ORG, CORNELL UNIVERSITY LIBRARY, 201 OLIN LIBRARY CORNELL UNIVERSITY ITHACA, NY 14853, 6 September 2021 (2021-09-06), XP091051835
• LIU SONGHUA SONGHUA LIU@SMAIL NJU EDU CN ET AL: "Stable Video Style Transfer Based on Partial Convolution with Depth-Aware Supervision", PROCEEDINGS OF THE 28TH ACM INTERNATIONAL CONFERENCE ON MULTIMEDIA, ACMPUB27, NEW YORK, NY, USA, 12 October 2020 (2020-10-12), pages 2445 - 2453, XP058478166, ISBN: 978-1-4503-7988-5, DOI: 10.1145/3394171.3413526

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 323 966 B1

**Description**

BACKGROUND

Image animation refers to generating a dynamic video from a static image in an automatic manner. As compared with the static image, the dynamic video is more vivid and expressive. Thus the user experience may be enhanced. Currently, image animation has already been widely used to generate dynamic backgrounds, dynamic wall papers, and etc. However, the quality of the generated video still needs to be improved. Therefore, it is desirable to provide an image animation method of generating a high-quality video.

Yuki Endo, et al: "Animating Landscape: Self-Supervised Learning of Decoupled Motion and Appearance for Single-Image Video Synthesis", ARXIV.ORG, Cornell University Library, 201 Olin Library Cornell University Ithaca, NY 14853, October 16, 2019, this document relates to a method that can create a high-resolution, long-term animation using convolutional neural networks (CNNs) from a single landscape image where mainly skies and waters are focused on. The key observation is that the *motion* (e.g., moving clouds) and *appearance* (e.g., time-varying colors in the sky) in natural scenes have different time scales. They are thus learned separately and predicted with decoupled control while handling future uncertainty in both predictions by introducing latent codes. Unlike previous methods that infer output frames directly, the CNNs discussed herein predict spatially-smooth intermediate data, i.e., for motion, flow fields for warping, and for appearance, color transfer maps, via self-supervised learning, i.e., without explicitly-provided ground truth. These intermediate data are applied not to each previous output frame, but to the input image only once for each output frame. This design is crucial to alleviate error accumulation in long-term predictions, which is the essential problem in previous recurrent approaches. The output frames can be looped like cinemagraph, and also be controlled directly by specifying latent codes or indirectly via visual annotations. The effectiveness of the method is demonstrated through comparisons with the state-of-the-arts on video prediction as well as appearance manipulation.

SUMMARY

It is the object of the present invention to generate efficiently a video based on a single input image.
This object is solved by the subject matter of the independent claims. Preferred embodiments of the present invention are defined by the dependent claims.

According to implementations of the subject matter described herein, there is provided a solution for generating a video from an image. In this solution, an input image and a reference video are obtained. A motion pattern of a reference object in the reference video is determined based on the reference video. An output video with the input image as a starting frame is generated. Motion of a target object in the output video has the motion pattern of the reference object and the target object is in the input image. In this way, according to the solution, the output video can be intuitively generated based on the input image and the reference video, and the motion of the target object in the output video has a motion pattern of the reference object in the reference video.

The Summary is to introduce a selection of concepts in a simplified form that are further described below in the Detailed Description. The Summary is not intended to identify key features or essential features of the subject matter described herein, nor is it intended to be used to limit the scope of the subject matter described herein.

BRIEF DESCRIPTION OF THE DRAWINGS

Fig. 1 illustrates a block diagram of a computing device which can implement various implementations of the subject matter described herein;

Fig. 2 illustrates an architecture diagram of a system for image animation according to implementations of the subject matter described herein;

Fig. 3 illustrates an architecture diagram of a system for training an image animation model according to implementations of the subject matter described herein;

Fig. 4 illustrates a flow chart of a method of image animation according to implementations of the subject matter described herein;

Fig. 5 illustrates a flow chart of a method of training an image animation model according to implementations of the subject matter described herein; and

Throughout the drawings, the same or similar reference symbols refer to the same or similar elements.

DETAILED DESCRIPTION OF EMBODIMENTS

The subject matter described herein will now be described with reference to some example implementations. It is to be understood that these implementations are described only for the purpose of illustration and help those skilled in the art to better understand and thus implement the subject matter described herein, without suggesting any limitations to the scope of the subject matter disclosed herein.

As used herein, the term "includes" and its variants are to be read as open terms that mean "includes, but is not limited to." The term "based on" is to be read as "based at least in part on." The terms "an implementation" and "one implementation" are to be read as "at least one implementation." The term "another implementation" is to be read as "at least one other implementation." The term "first," "second," and the like may refer to different or the same objects. Other definitions, either explicit or implicit, may be included below.

As used herein, the term "neural network" can process an input and provides a corresponding output and it generally includes an input layer, an output layer and one or more hidden layers between the input and output layers. The neural network used in the deep learning applications generally includes a plurality of hidden layers to increase the depth of the network. Individual layers of the neural network model are connected in sequence, such that an output of a preceding layer is provided as an input for a following layer, where the input layer receives the input of the neural network while the output of the output layer acts as the final output of the neural network. Each layer of the neural network includes one or more nodes (also referred to as processing nodes or neurons), each of which processes the input from the preceding layer. CNN is a type of neural network, comprising one or more convolutional layers for performing a convolutional operation for respective input. The CNN may be used in various scenarios, and particularly suitable for processing image or video data. In the text herein, the terms "neural network", "network" and "neural network model" may be used interchangeably.

As stated above, since the dynamic video is more vivid and interesting than the static image, the dynamic video may improve the user's use experience. However, a conventional image animation method usually involves directly applying a pre-obtained motion pattern to a whole image without considering semantic differences of different objects in the image. Thus the generated output video is dull and rigid. Additionally, the pre-obtained motion pattern is usually stored and invoked in the form of a codebook so that it is difficult for the user to know the motion pattern visually. Therefore, it is very difficult for the user to imagine the output video generated by the application of the motion pattern. For example, the user might need to try various motion patterns to find a preferred motion pattern for generating a desired output video. Therefore, it is desirable to provide an image animation method of generating a high-quality video in a visual manner.

Some problems existing in the conventional solutions of generating a video from an image are discussed above. According to implementations of the subject matter described herein, there is provided a solution for generating a video from an image, aiming to solve one or more of the above problems and other potential problems. In this solution, an input image and a reference video are obtained. A motion pattern of a reference object in the reference video is determined based on the reference video. An output video taking the input image as a starting frame is generated. Motion of a target object in the output video has the motion pattern of the reference object and the target object is in the input image. Various example implementations of this solution are further described in detail with reference to figures.

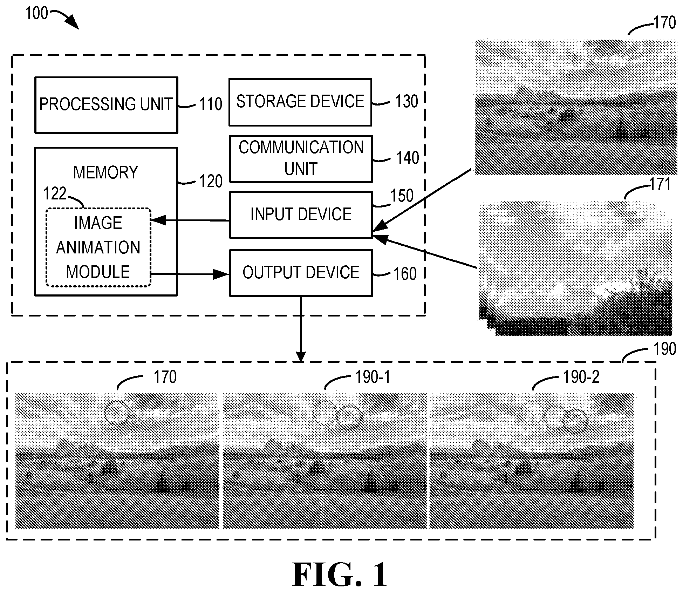

Fig. 1 illustrates a block diagram of a computing device 100 that can implement a plurality of implementations of the subject matter described herein. It should be understood that the computing device 100 shown in Fig. 1 is only exemplary and should not constitute any limitation on the functions and scopes of the implementations described by the subject matter described herein. As shown in Fig. 1, the computing device 100 includes a computing device 100 in the form of a general purpose computing device. Components of the computing device 100 may include, but are not limited to, one or more processors or processing units 110, a memory 120, a storage device 130, one or more communication units 140, one or more input devices 150, and one or more output devices 160.

In some implementations, the computing device 100 may be implemented as various user terminals or service terminals with computing capability. The service terminals may be servers, large-scale computing devices, and the like provided by a variety of service providers. The user terminal, for example, is a mobile terminal, a fixed terminal or a portable terminal of any type, including a mobile phone, a site, a unit, a device, a multimedia computer, a multimedia tablet, Internet nodes, a communicator, a desktop computer, a laptop computer, a notebook computer, a netbook computer, a tablet computer, a Personal Communication System (PCS) device, a personal navigation device, a Personal Digital Assistant (PDA), an audio/video player, a digital camera/video, a positioning device, a television receiver, a radio broadcast receiver, an electronic book device, a gaming device or any other combination thereof, including accessories and peripherals of these devices or any other combination thereof. It may also be predicted that the computing device 100 can support any type of user-specific interface (such as a "wearable" circuit, and the like).

The processing unit 110 may be a physical or virtual processor and may execute various processing based on the programs stored in the memory 120. In a multi-processor system, a plurality of processing units executes computer-executable instructions in parallel to enhance parallel processing capability of the computing device 100. The processing unit 110 can also be known as a central processing unit (CPU), a graphics processing unit (GPU), microprocessor, controller and microcontroller.

The computing device 100 usually includes a plurality of computer storage mediums. Such mediums may be any attainable medium accessible by the computing device 100, including but not limited to, a volatile and non-volatile medium, a removable and non-removable medium. The memory 120 may be a volatile memory (e.g., a register, a cache, a Random Access Memory (RAM)), a non-volatile memory (such as, a Read-Only Memory (ROM), an Electrically Erasable Programmable Read-Only Memory (EEPROM), flash), or any combination thereof. The memory 120 may include an image animation module 122, which is configured to perform various functions described herein. The image animation module 122 may be accessed and operated by the processing unit 110 to realize corresponding functions.

The storage device 130 may be a removable or non-removable medium, and may include a machine-readable medium, which may be used for storing information and/or data and be accessed within the computing device 100. The computing device 100 may further include additional removable/non-removable, volatile/non-volatile storage mediums. Although not shown in Fig. 1, there may be provided a disk drive for reading from or writing into a removable and non-volatile disk and an optical disc drive for reading from or writing into a removable and non-volatile optical disc. In such cases, each drive may be connected to a bus (not shown) via one or more data medium interfaces.

The communication unit 140 implements communication with another computing device via a communication medium. Additionally, functions of components of the computing device 100 may be implemented by a single computing cluster or a plurality of computing machines, and these computing machines may communicate through communication connections. Therefore, the computing device 100 may operate in a networked environment using a logic connection to one or more other servers, a Personal Computer (PC) or a further general network node.

The input device 150 may be one or more various input devices, such as a mouse, a keyboard, a trackball, a voice-input device, and the like. The output device 160 may be one or more output devices, e.g., a display, a loudspeaker, a printer, and so on. The computing device 100 may also communicate through the communication unit 140 with one or more external devices (not shown) as required, where the external device, e.g., a storage device, a display device, and so on, communicates with one or more devices that enable users to interact with the computing device 100, or with any device (such as a network card, a modem, and the like) that enable the computing device 100 to communicate with one or more other computing devices. Such communication may be executed via an Input/Output (I/O) interface (not shown).

In some implementations, apart from being integrated on an individual device, some or all of the respective components of the computing device 100 may also be set in the form of a cloud computing architecture. In the cloud computing architecture, these components may be remotely arranged and may cooperate to implement the functions described by the subject matter described herein. In some implementations, the cloud computing provides computation, software, data access and storage services without informing a terminal user of physical locations or configurations of systems or hardware providing such services. In various implementations, the cloud computing provides services via a Wide Area Network (such as Internet) using a suitable protocol. For example, the cloud computing provider provides, via the Wide Area Network, the applications, which can be accessed through a web browser or any other computing component. Software or components of the cloud computing architecture and corresponding data may be stored on a server at a remote location. The computing resources in the cloud computing environment may be consolidated at a remote datacenter or dispersed. The cloud computing infrastructure may provide, via a shared datacenter, the services even though they are shown as a single access point for the user. Therefore, components and functions described herein can be provided using the cloud computing architecture from a service provider at a remote location. Alternatively, components and functions may also be provided from a conventional server, or they may be mounted on a client device directly or in other ways.

The computing device 100 may be used for implementing generation of a video from an image in various implementations of the subject matter described herein. As shown in Fig. 1, the computing device 100 may receive an input image 170 and a reference video 171 from an input device 150. The input device 150 may transmit the input image 170 and reference video 171 to the image animation module 122. The image animation module 122 generates an output video 190 based on the input image 170 and the reference video 171. The output video 190 comprises the input image 170 serving as a starting frame, and at least one subsequent output frame, e.g., output frames 190-1, 190-2 shown in Fig. 1.

For example, the input image 170 may be a landscape image to be processed. As shown in the figure, the input image 170 may be a landscape image containing objects such as grass, a blue sky, and clouds. In other implementations, the input image 170 may be a landscape image containing a waterfall, a starry sky, a lake, etc. It should be understood that the video may also be generated based on the input image 170 of a type that is not a landscape image. The reference video 171 may be an input video for extracting a reference motion pattern. The reference video 171 at least includes two consecutive frames. In the case where the input image 170 is a landscape image containing grass, a blue sky and clouds, the reference video 171 may also be a video containing grass, a blue sky and clouds. In this case, the motion patterns of the grass, blue sky, and clouds in the reference video 171 may be extracted and applied to the grass, blue sky, and clouds in the input image 170 respectively to generate the output video 190. As shown in Fig. 1, the clouds in the output video 190 have moved (as indicated by the circles) in consecutive frames 170, 190-1, and 190-2, and the motion of the clouds in the output video 190 has the motion pattern of the clouds in the reference video 171. In some implementations, the objects in the reference video 171 may not correspond to the objects in the input image 170. In this case, according to the user's instructions, the motion pattern of any object in the reference video 171 can be applied to a target object in the input image 170 to generate the desired output video 190.

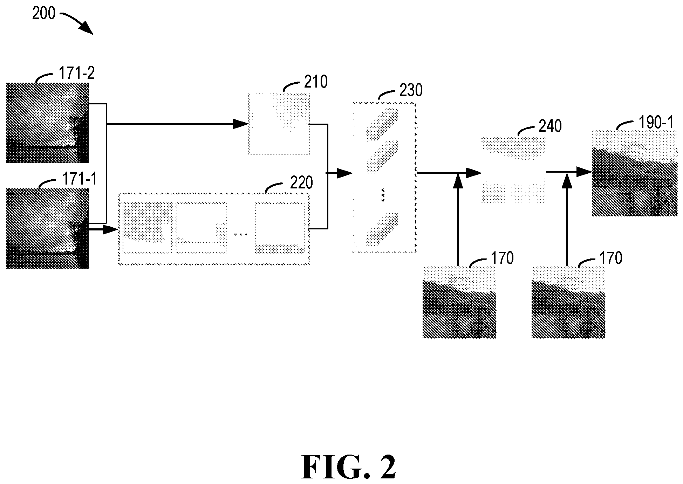

Fig. 2 illustrates an architecture diagram of a system 200 for image animation according to implementations of the subject matter described herein. The system 200 may be implemented in the computing device 100 of Fig. 1. The system 200 may be an end-to-end neural network model.

As shown in Fig. 2, the computing device 100 may determine a first reference motion feature 210 based on a first frame 171-1 and a subsequent second frame 171-2 of the reference video 171. The first reference motion feature 210 is used to characterize the motion from the first frame 171-1 to the second frame 171-2. The first reference motion feature 210 may be represented by an optical flow. The optical flow is an instantaneous speed of the pixel movement of a moving object in space. When a time interval is very short (e.g., between two consecutive frame of the video), the optical flow is equivalent to the displacement of a target point. The optical flow may be represented by a graph of dual channels (representing displacements in x and y directions respectively) and the graph has the same size of the first frame and second frame. The first reference motion feature 210 represented by optical flow may be determined with optical flow estimation. The optical flow estimation finds a correspondence relationship between the first frame and the second frame by using changes of pixels in a sequence of images in the time domain and the correlation between adjacent frames, thereby calculating motion information of the object between adjacent frames. In other words, the optical flow estimation may determine the first reference motion feature 210 for characterizing the motion from the first frame 171-1 to the second frame 171-2. In some implementations, FlowNet 2.0 may be used to extract the optical flow Ft based on the frame t and the frame *t+1*. In the case where optical flow estimation is used to determine the first reference motion feature, the displacement of the target point between adjacent frames should be small due to the limitation of the optical flow method itself. Therefore, the object in the image should not displace significantly between adjacent frames. In this case, as compared with the reference video depicting a ball game where the object displaces more significantly, the first reference motion feature 210 with higher accuracy may be extracted from the reference video 171 depicting the changes of the landscape. It should be appreciated that the scope of the subject matter described herein does not limit the method of determining the first reference motion feature 210. In cases where other methods are used to determine the reference motion feature, the amplitude of the change of the object in the reference video 171 between adjacent frames may not be limited. In other words, the type of the reference video 171 may not be limited to the landscape images.

In some implementations, the computing device 100 may determine a first set of reference objects in the first frame 171-1 and at least one object in the input image 170. The at least one object may include a target object. Referring to Fig. 2, the first set of reference objects in the first frame 171-1 may include the blue sky, clouds, trees, and a lake. The at least one object in the input image 170 may include the blue sky, clouds, trees, a lake, and a bridge. In some implementations, the target object in the input image 170 may be clouds. In other implementations, the target objects in the input image 170 may include clouds and trees.

Various methods may be employed to determine the first set of reference objects in the first frame 171-1 and the at least one object in the input image 170. For example, semantic segmentation may be used to determine objects with corresponding semantics. In this case, the objects with same semantics correspond to a same semantic segmentation mask. In some implementations, the first set of semantic segmentation masks 220 may be generated by performing semantic segmentation on the first frame 171-1. The first set of semantic segmentation masks 220 may indicate corresponding positions of the first set of reference objects in the first frame 171-1. For example, referring to Fig. 2, the first set of semantic segmentation masks 220 may include semantic segmentation masks corresponding to the blue sky, trees, and lake, respectively. The semantic segmentation mask may be represented by a binary mask. For example, assuming that the first frame 171-1 has 300×300 pixels, the semantic segmentation mask for each semantic may be represented by a matrix of 300 rows and 300 columns. The binary value of each element in the matrix indicates whether the object with this semantic locates at the corresponding position. Referring to Fig. 2, in the first frame 171-1, the lake only locates on the bottom of the image, so only bottom elements of the matrix representing the semantic segmentation mask for the lake only have values of 1, and the other elements of the matrix have values of zero. Similarly, the at least one semantic segmentation mask may be generated by performing semantic segmentation on the input image 170. The at least one semantic segmentation mask may indicate the corresponding position of the at least one object in the input image 170. Referring to Fig. 2, semantic segmentation masks corresponding to the blue sky, clouds, trees, the lake and the bridge may be generated based on the input image 170, respectively. Each semantic segmentation mask may indicate a corresponding position of an object with corresponding semantics in the input image 170. In some implementations, in addition to semantic segmentation, other methods may be used to determine the first set of reference objects in the first frame 171-1 and the at least one object in the input image 170. The scope of the subject matter described herein is not limited here.

In some implementations, the computing device 100 may generate a first predicted motion feature 240 for the input image 170 based on the first reference motion feature 210, by determining a semantic mapping of the at least one reference object in the first set of reference objects to the at least one object in the input image 170. As described above, the first reference motion feature 210 is used to characterize the motion from the first frame 171-1 to the second frame 171-2, and may be represented by the optical flow. Similarly, the first predicted motion feature 240 may also be represented by the optical flow. The first predicted motion feature 240 may characterize the predicted motion of the input image 170. It should be noted that, the first reference motion feature 210 obtained by, for example, optical flow estimation can only describe the overall motion of the image, and cannot separately describe the motion of each reference object in the image. In this case, if the first reference motion feature 210 is directly applied to the input image 170, it is difficult to make the target object in the input image 170 move according to a desired motion pattern. For example, the tree in the input image 170 may also move according to the motion pattern of the lake in the reference video 171. Therefore, if the first reference motion feature 210 is directly applied as the first predicted motion feature 240 for the input image 170, the generated output video 190 might not have the high quality.

Therefore, in some implementations, the computing device 100 may determine the motion pattern 230 for each reference object in the reference video 171 based on the first reference motion feature 210, and use the motion patterns 230 to generate the first predicted motion feature 240. In some implementations, the computing device 100 may transfer the motion pattern 230 of the reference object to the target object based on the semantic mapping of the reference object to the target object. In this case, the motion pattern 230 for the reference object may be transferred to the target object in the input image 170, by determining the semantic mapping of the at least one reference object of the first set of reference objects to the at least one object in the input image 170. For example, the motion pattern of the lake in the reference video 171 may be transferred to the lake in the input image 170, by mapping the lake in the reference video 171 to the lake in the input image 170. Furthermore, the motion pattern of the tree in the reference video 171 may be transferred to the tree in the input image 170, by mapping the tree in the reference video 171 to the tree in the input image 170.

In some implementations, the computing device 100 may further transfer the motion pattern 230 of the reference object to the target object based on a predetermined rule indicating the mapping of the reference object to the target object in the input image 170. The predetermined rules may be customized by the user. Examples of the predetermined rule may include mapping based on colors of the objects, mapping based on shapes of the objects, and so on. Additionally, the predetermined rule may also indicate that when certain objects in the input image 170 are not mapped, these objects remain still in the generated output video 190.

In some implementations, the computing device 100 may further transfer a motion pattern of an additional reference object to an additional target object, based on the mapping of the additional reference object of one or more additional reference videos to the additional target object in the input image 170. In this case, the corresponding motion patterns 230 of a plurality of reference objects may be respectively transferred to a plurality of target objects in the input video 170, by determining the mapping of the plurality of reference objects in the plurality of reference videos respectively to the plurality of target objects in the input image 170. For example, the motion pattern 230 of the lake in the first reference video may be transferred to the lake in the input image 170, by mapping the lake in the first reference video to the lake in the input image 170. Furthermore, the motion pattern of the tree in the second reference video may be transferred to the tree in the input image 170, by mapping the trees in the second reference video to the trees in the input image 170.

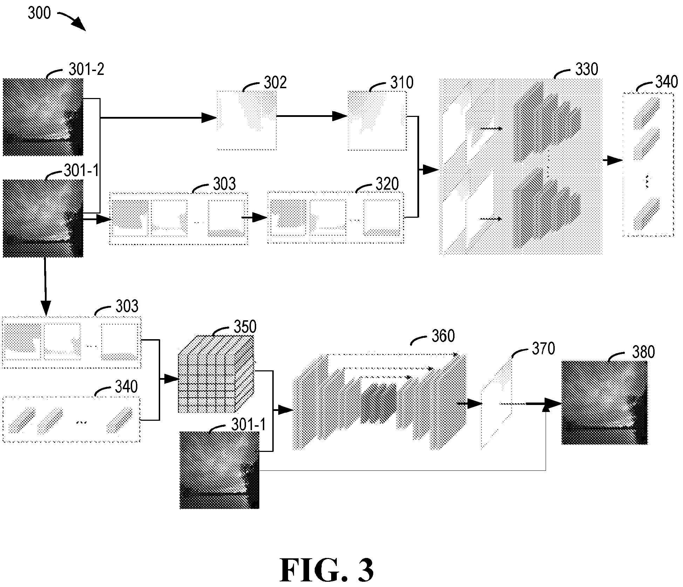

In some implementations, the computing device 100 may combine the motion patterns 230 of the reference objects in the reference video 171 into a combined motion pattern (not shown in Fig. 2) for the input image 170 based on various mapping rules. For example, referring to Fig. 2, a combined motion pattern for the input image 170 may be generated by mapping the blue sky and trees in the first frame 171-1 to the blue sky and trees in the input image 170, respectively. Additionally, when certain objects in the input image 170 are not mapped, values of corresponding elements corresponding to these objects in the combined motion pattern may be set to zero. Based on the combined motion pattern, the first predicted motion feature 240 for the input image 170 may be determined. For example, the first predicted motion feature 240 may be extracted using a convolutional neural network for motion prediction. Hereinafter, the details of generating the combined motion pattern and generating the first predicted motion feature 240 will be described in detail with reference to Fig. 3.

In some implementations, the computing device 100 may generate the first output frame 190-1 following the starting frame in the output video 190, based on the first predicted motion feature 240 and the input image 170. As stated above, the first predicted motion feature 240 may be used to characterize motion of the input image 170 that will occur, and the motion corresponds to the motion from the first frame 171-1 to the second frame 171-2 in the reference video 171. In some implementations, a warp based on the first predicted motion feature 240 may be performed on the input image 170 to generate the first output frame 190-1. The term warp may refer to a certain deformation or transformation between images. For example, performing a warp may include re-sampling the image and interpolating sampling points. In some implementations, the warp may refer to optical flow mapping. In other words, the input image 170 may be subjected to optical flow mapping based on the optical flow, and thus the first output frame 190-1 may be generated. The scope of the subject matter described herein does not limit the type of the warp for generating the first output frame 190-1.

In some implementations, the computing device 100 may further generate a second output frame 190-2 following the first output frame 190-1 in the output video 190 based on the generated first output frame 190-1. Similarly, the second reference motion feature may be determined based on the second frame 171-2 and the subsequent third frame in the reference video 171. The second reference motion feature is used to characterize the motion from the second frame 171-2

to the third frame. The second set of reference objects in the second frame 171-2 and at least one object in the first output frame 190-1 may be determined. It should be noted that since the first output frame 190-1 is generated by performing optical flow mapping on the input image 170, the objects included in the first output frame 190-1 should be consistent with those included in the input image 170. However, due to the motion of the objects, the corresponding semantic segmentation mask for each object may have changed. The second predicted motion feature for the first output frame 190-1 may be generated based on the second reference motion feature, by determining a semantic mapping of the at least one reference object in the second set of reference objects to the at least one object in the first output frame 190-1. It should be noted that it is generally desirable that the target object in the output video 190 moves according to the motion pattern of the same reference object in consecutive output frames. In this case, the semantic mapping of the reference object to the target object is usually maintained unchanged. The second output frame 190-2 following the first output frame 190-1 in the output video 190 may be generated based on the generated first predicted motion feature 240, the second predicted motion feature and the input image. It should be noted that, in contrast to the generation of the first output frame 190-1, the second output frame 190-2 may be generated by performing a warp based on a sum of the first predicted motion feature 240 and the second predicted motion feature on the input image 170. The error accumulation of the generated output frame may be reduced by directly performing the warp on the input image 170 to generate the second output frame 190-2, such that the output video 190 may be more realistic.

In some implementations, for each of the plurality of reference videos 171, the corresponding reference motion features 210 corresponding to the set of reference objects may be determined based on adjacent frames, and the corresponding semantic segmentation masks 220 may be generated. Based on this, a plurality of sets of motion patterns 230 of the plurality of reference videos 171 may be generated. Similarly, the plurality of sets of motion patterns 230 of the reference objects may be combined into a combined motion pattern for the input video 170, by determining the semantic mapping from at least one reference object in the plurality of sets of reference objects to at least one object in the input image 170. For example, the lake in the first reference video may be mapped to the lake in the input image 170 and the tree in the second reference video may be mapped to the tree in the input image 170, thereby using the motion pattern of the lake in the first reference video and the motion pattern of the tree in the second reference video to form the combined motion pattern, to generate the first predicted motion feature 240 for the input image 170.

In this way, in the implementation of the subject matter described herein, the output video 190 may be generated from the input image 170 based on the motion of the reference object in the reference video 171, and the motion of the target object in the generated output video 190 has the motion pattern of the reference object. The user may respectively transfer the motion patterns of the plurality of reference objects in the reference video to the corresponding target objects. In addition, with the introduced reference video 171, the user may intuitively know the motion pattern to be applied to the input image 170. Therefore, the user will easily imagine the motion performance of the target object in the generated output video 190 without various attempts to achieve the desired motion performance. In addition, because the output video 190 is generated by directly performing the optical flow mapping on the input image 170 such that each pixel in the output video 190 comes from the original input image 170, the output video 190 may have high authenticity. In addition, in the embodiment of the subject matter described herein, the output video 190 may be generated by directly inputting the reference video 171 and the input image 170, and the motion of the target object in the input image 170 in the output video 190 has the motion pattern of the reference object. In other words, it is not needed to predict the motion pattern of the target object based on the motion pattern 230 of the reference object. In contrast, the motion pattern 230 of the reference object is directly transferred to the target object, such that the motion of the target object in the output video 190 has the motion pattern 230 of reference object.

The system 200 for image animation is described above with reference to Fig. 2. Hereinafter, the system 300 for training an image animation model will be described with reference to Fig. 3. Fig. 3 illustrates an architecture diagram of a system 300 for training an image animation model according to implementations of the subject matter described herein. The system 300 may be implemented in the computing device 100 of Fig. 1. As shown in Fig. 3, the system 300 obtains a training video which includes a first training frame 301-1 and a subsequent second training frame 301-2. The system 300 uses a machine learning model to generate a predicted video for the training video. The motion of the object in the predicted video has the motion pattern of the object in the training video, and the predicted video includes the first training frame 301-1 and a predicted frame 380 for the subsequent second training frame 301-2. The system 300 trains the machine learning model at least based on the predicted frame 380 and the second training frame 301-2.

It should be noted that, the training video in the system 300 corresponds to the reference video 171 used by the image animation model during inference, and the first training frame 301 of the training video corresponds to the input image 170 used during inference. Therefore, the predicted video generated by the machine learning model based on the first training frame 301 (corresponding to the input image 170) and the training video (corresponding to the reference video 171) is expected to be consistent with the training video itself. In other words, the second training frame 301-2 of the training video may function as a label for the predicted frame 380 for training the image animation model. In this way, the machine learning model for generating the video from the image may be trained in a supervised manner by taking the training video itself as the label. To enable the trained model to be widely applied to other unseen input images and reference videos, an additional spatial transformation operation may be performed in the implementations of the subject matter described herein to prevent the model from excessively learning the spatial association between frames of the training video. Details of the spatial transformation operation will be described below in detail with reference to Fig. 3.

As shown in Fig. 3, the system 300 may generate a training motion feature 302 based on the first training frame 301-1 and the second training frame 301-2. The training movement feature 302 is used to characterize the motion from the first training frame 301-1 to the second training frame 301-2. In some implementations, the system 300 may further determine a set of training objects in the first training frame 301-1. As described with reference to Fig. 2, the first training frame 301-1 may be semantically segmented to generate a corresponding set of semantic segmentation masks 303. The set of semantic segmentation masks 303 may indicate corresponding positions of the set of training objects in the first training frame 301-1.

The system 300 may perform the same spatial transformation on the training motion feature 302 and the set of training semantic segmentation masks 303, respectively, to generate a transformed training motion feature 310 and a set of transformed training semantic segmentation masks 320. The spatial transformation may disrupt the spatial association between the first training frame 301-1 (corresponding to the input image 170) in the training video and the training video (corresponding to the reference video), so that the generalization ability of the trained image animation model may be enhanced. In addition, performing the same spatial transformation on the training motion feature 302 and the set of training semantic segmentation masks 303 may keep the position of the object in the image spatially consistent with that in the motion feature. Examples of spatial transformation may include a horizontal flip, a vertical flip, a rotation, and so on. For example, Fig. 3 shows a horizontal flip as an example of the spatial transformation.

In some implementations, the system 300 may generate a motion pattern 340 for each training object based on the transformed training motion feature 310 and the set of transformed training semantic segmentation masks 320. As shown in Fig. 3, a partial convolution module 330 may be used to determine the motion pattern 340 for the training object in the first training frame 301-1. The partial convolution has been widely used in fields such as image completion and image repair. In the implementation of the subject matter described herein, the transformed semantic segmentation mask 320 for each training object may be used to perform the partial convolution on the training motion feature 310 to determine the motion pattern for the respective training object. Specifically, the partial convolution may be performed with reference to the following Equation (1):

$$
x' = \begin{cases} \mathbf{W}^T(\mathbf{X} \odot \mathbf{M})\frac{\text{sum}(\mathbf{1})}{\text{sum}(\mathbf{M})} + b, & \text{if } \text{sum}(\mathbf{M}) > 0, \\ 0, & \text{otherwise}, \end{cases} \tag{1}
$$

where $\mathbf{X}$ represents a portion of the transformed training motion feature 310 that corresponds to the convolution kernel, $\mathbf{M}$ represents a portion of the semantic segmentation mask for a specific training object that corresponds to the convolution kernel, $\mathbf{W}$ and b are the learnable weight and deviation respectively, sum(1) represents a sum of values for elements of an all 1 matrix with the size of the convolution kernel, sum($\mathbf{M}$) represents a sum of values for elements of the portion of the mask, and sum($\mathbf{1}$)/sum($\mathbf{M}$) may be used to compensate for the differences between areas of different objects in a convolution sliding window.

It may be seen from the Equation (1) that only a portion of the transformed training motion feature 310 that corresponds to the position of a specific training object is passed on to the following calculation, by performing the convolution using the mask for the specific training object and the transformed training motion feature 310. In other words, only the portion of the motion feature that corresponds to the specific reference object is retained.

In addition, after each partial convolution, the semantic segmentation mask 320 may be updated using Equation (2).

$$
m' = \begin{cases} 1, & \text{if } \text{sum}(\mathbf{M}) > 0, \\ 0, & \text{otherwise}, \end{cases} \tag{2}
$$

Equation (2) shows that if any element in the portion of the mask that corresponds to the convolution kernel corresponds to the specific training object, the mask value corresponding to the center of the convolution kernel will be updated to 1. In other words, the transformed training motion feature 310 corresponding to the center of the convolution kernel is considered as being related to the specific training object, and thus is retained for the following calculation. In this way, the motion pattern 340 for each training object may be determined based on the transformed training motion feature 310 which describes the overall motion of the image.

In some implementations, a predicted motion feature 370 for the first training frame 301-1 may be generated based on the motion pattern 340 for each training object. It should be noted that the first training frame 301 here corresponds to the input image 170 used during inference. As shown in Fig. 3, a combined motion pattern 350 for the first training frame 301-1 may be generated based on the semantic segmentation mask 303 for the first training frame 301-1 and the motion pattern 340 of the training object. The predicted motion feature 370 for the first training frame 301-1 may be determined based on the combined motion pattern 350 and the first training frame 301-1. As described with reference to Fig. 2, the motion patterns of the mapped training objects may be combined into a combined motion pattern 350 for the first training frame 301-1 based on the semantic segmentation mask 303 of at least one object in the first training frame 301-1, by using the semantic mapping of the at least one object in the first training frame 301-1 to the training objects. For example, referring to Figure 3, the lake in the first training frame 301-1 (corresponding to the input image 170) may be mapped to the lake in the first training frame 301-1 (corresponding to the first frame 171-1 in the reference video 171). It should be appreciated that, in the system 300, since the first training frame 301-1 corresponds to both of the input image 170 and the first frame 171-1 in the reference video 171, the operation of the semantic mapping may be omitted and the motion patterns 340 may be directly combined into the combined motion pattern 350 for the first training frame 301-1. Equation (3) may be used to determine the combined motion pattern 350.

$$L(i, j) = z_k \text{ , when } M^k(i, j) = 1 \qquad (3)$$

where $L(i, j)$ represents a value (represented by a vector) of the combined motion pattern 350 at the position $(i, j)$, and $M^k$ represents the semantic segmentation mask for the object $k$ in the first training frame 301-1 (corresponding to the input image 170), $z_k$ represents the motion pattern of the object $k$ in the first training frame 301-1 (corresponding to the first frame 171-1 in the reference video 171). The equation (3) shows that the value of the combined motion pattern 350 at the position $(i, j)$ that satisfies the condition $M^k(i, j) = 1$ may be determined as $z_k$. Thus $z_k$ may be combined into the combined motion pattern 350 for the first training frame 301-1.

In some implementations, the predicted motion feature 370 for the first training frame 301-1 may be determined based on the combined motion pattern 350 and the first training frame 301-1. As described above, the predicted motion feature 370 may also be represented by optical flow. The convolutional neural network may be used to predict the motion feature. For example, the combined motion pattern 350 and the first training frame 301-1 may be concatenated and input into a U-Net network for predicting the motion feature to generate the predicted motion feature 370.

In some implementations, the predicted frame 380 may be generated based on the predicted motion feature 370 and the first training frame 301-1. As stated above, the warp may be performed on the first training frame 301-1 based on the predicted motion feature 370 to generate the predicted frame 380. In some implementations, optical flow mapping may be performed on the first training frame 301-1 based on the predicted motion feature 370 represented by optical flow, thereby generating the predicted frame 380.

In some implementations, at least one loss function for training the image animation model may be determined. A target loss function may be determined by performing a weighted summation on the at least one loss function. The image animation model may be trained by minimizing the target loss function.

In some implementations, a frame loss function $\mathcal{L}_{frame}$ may be determined based on the difference between the predicted frame 380 and the second training frame 301-2. For example, the one-norm between the predicted frame 380 and the second training frame 301-2 may be calculated with reference to Equation (4):

$$\mathcal{L}_{frame} = \left\| \hat{I}_{t+1} - I_{t+1} \right\|_1 \qquad (4)$$

where $\hat{I}_{t+1}$ and $I_{t+1}$ represent the predicted frame 380 and the second training frame 301-2, respectively, and $\mathcal{L}_{frame}$ represents the frame loss function.

In some implementations, a motion feature loss function $\mathcal{L}_{flow}$ may be determined based on the difference between the predicted motion feature 370 and the training motion feature 302. For example, the one-norm between the predicted motion feature 370 and the training motion feature 302 may be calculated with reference to Equation (5):

$$\mathcal{L}_{flow} = \left\| \hat{F}_t - F_t \right\|_1 \qquad (5)$$

where $\hat{F}_t$ and $F_t$ respectively represent the predicted motion feature 370 and the training motion feature 302 for the first training frame 301-1, and $\mathcal{L}_{flow}$ represents the motion feature loss function.

In some implementations, a smoothness loss function $\mathcal{L}_s$ may be determined based on the spatial distribution of the predicted motion feature 370 and the spatial distribution of the predicted frame 380. With the introduced smoothness loss function $\mathcal{L}_s$, the motion feature predicted by the image animation model may be smoother. For example, the smoothness loss function $\mathcal{L}_s$ may be calculated with reference to Equations (6) and (7):

$$\mathcal{L}_s = \sum_{\mathbf{p},\mathbf{q} \in N(\mathbf{p})} w\left(\hat{I}_{t+1}(\mathbf{p}), \hat{I}_{t+1}(\mathbf{q})\right) \left\| \hat{F}_t(\mathbf{p}) - \hat{F}_t(\mathbf{q}) \right\|_1 \tag{6}$$

$$w(\mathbf{x}, \mathbf{y}) = \exp\left(-\frac{\|\mathbf{x} - \mathbf{y}\|_1}{\sigma}\right) \tag{7}$$

where $\hat{I}_{t+1}(\mathbf{p})$ and $\hat{I}_{t+1}(\mathbf{q})$ respectively represent the pixel at position $\mathbf{p}$ and the pixel at adjacent position $\mathbf{q}$ in the predicted frame 380, $\hat{F}_t(\mathbf{p})$ and $\hat{F}_t(\mathbf{q})$ respectively represents the value at position $\mathbf{p}$ and the value at adjacent position $\mathbf{q}$ of the predicted motion feature 370, and $\mathcal{L}_s$ represents the smoothness loss function. Equation (7) further defines the function $w$ in the Equation (6).

As stated above, the target loss function may be determined by performing a weighted summation on the at least one loss function. For example, the target loss function $\mathcal{L}_{total}$ may be calculated with reference to Equation (8), where $\alpha$, $\beta$, and $\gamma$ represent corresponding coefficients.

$$\mathcal{L}_{total} = \alpha * \mathcal{L}_{frame} + \beta * \mathcal{L}_{flow} + \gamma * \mathcal{L}_s \tag{8}$$

The image animation model may be trained by minimizing the target loss function. The trained image animation model may generate, based on the input image 170 and the reference video 171, the output video 190 wherein the motion of the target object has the motion pattern of the corresponding reference object in the reference video 171.

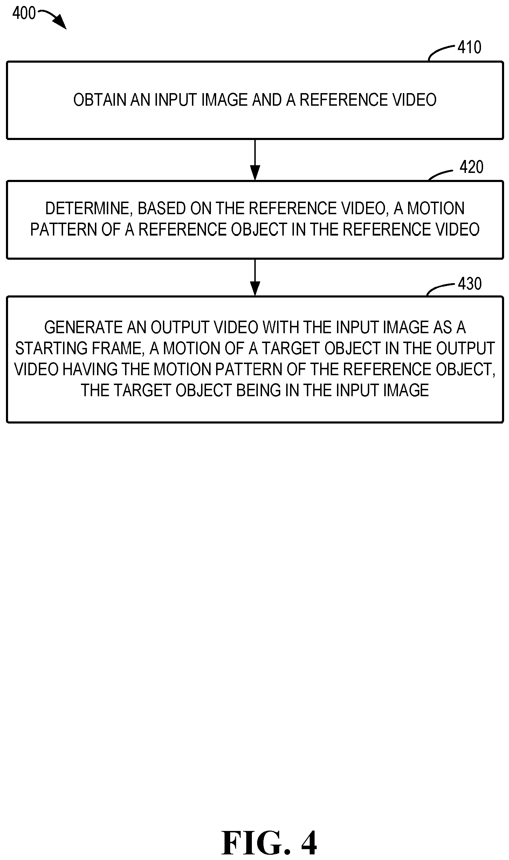

Fig. 4 illustrates a flow chart of a method 400 for image animation according to implementations of the subject matter described herein. The method 400 may be implemented by the computing device 100, for example, implemented at the image animation module 122 in the memory 120 of the computing device 100.

As shown in Fig. 4, at block 410, the computing device 100 obtains the input image 170 and the reference video 171. At block 420, the computing device 100 determines the motion pattern 230 of the reference object in the reference video 171 based on the reference video 171. At block 430, the computing device 100 generates the output video 190 with the input image 170 as a starting frame. The motion of the target object in the input image 170 in the output video 190 has the motion pattern of the reference object in the reference video 171.

In some implementations, generating the output video includes: transferring the motion pattern of the reference object to the target object based on the semantic mapping from the reference object to the target object.

In some implementations, generating the output video includes at least one of the following: transferring, based on a predetermined rule indicating a mapping of the reference object to the target object, the motion pattern of the reference object to the target object; and transferring, based on a mapping of an additional reference object in an additional reference video to an additional target object in the input image, a motion pattern of the additional reference object to the additional target object.

In some implementations, determining the motion pattern of the reference object includes: determining, based on a first frame and a subsequent second frame of the reference video, a first reference motion feature characterizing motion from the first frame to the second frame; determining a first set of reference objects in the first frame by generating a first set of semantic segmentation masks for the first frame, the first set of semantic segmentation masks indicating respective positions of the first set of reference objects in the first frame; performing a partial convolution on the first reference motion feature and the first set of semantic segmentation masks to determine motion patterns of the first set of reference objects.

In some implementations, generating the output video includes: determining at least one object in the input image by generating at least one semantic segmentation mask for the input image, the at least one object including the target object, the at least one semantic segmentation mask indicating a respective position of the at least one object in the input image; determining, based on a respective motion pattern of at least one reference object of the first set of reference objects and the at least one semantic segmentation mask, a combined motion pattern for the input image, by determining a semantic mapping of the at least one reference object to the at least one object; generating, based on the combined motion pattern and the input image, a first predicted motion feature for the input image by using a convolutional neural network; and generating a first output frame, in the output video, following the starting frame by performing a warp on the input image using the first predicted motion feature.

In some implementations, generating the output video further includes: determining, based on the second frame and a subsequent third frame of the reference video, a second reference motion feature characterizing motion from the second frame to the third frame; generating a second set of semantic segmentation masks for the second frame, the second set of semantic segmentation masks indicating respective positions of the first set of reference objects in the second frame; determining second motion patterns of the first set of reference objects by performing a partial convolution on the second reference motion feature and the second set of semantic segmentation masks; and generating a second output frame, in the output video, following the first output frame, motion of the target object from the first output frame to the second output frame having the respective second motion pattern of the reference object of the first set of reference objects.

It can be seen from the above that in the image animation solution according to the implementations of the subject matter described herein, the motion pattern of the reference object in the reference video may be intuitively applied to the input image to generate the output video, and the target object in the output video has the motion pattern of the reference object.

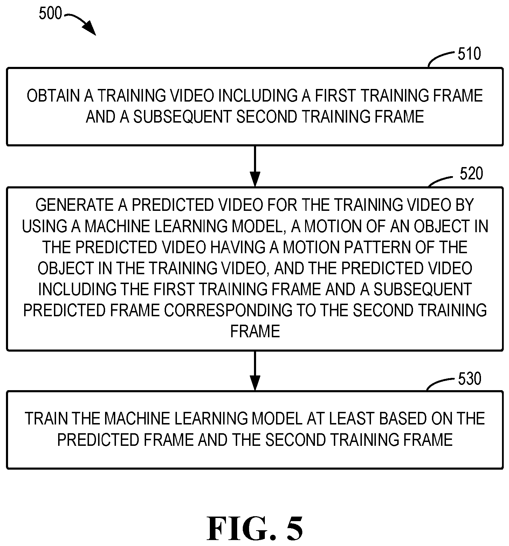

Fig. 5 illustrates a flow chart of a method 500 for training an image animation model according to implementations of the subject matter described herein. The method 500 may be implemented by the computing device 100, for example, implemented at the image animation module 122 in the memory 120 of the computing device 100.

As shown in Fig. 5, at block 510, the computing device 100 obtains a training video. The training video includes a first training frame and a subsequent second training frame. At block 520, the computing device 100 generates a predicted video for the training video by using a machine learning model. The motion of the object in the predicted video has the motion pattern of the object in the training video, and the predicted video includes the first training frame and a predicted frame for the subsequent second training frame. At block 530, the computing device 100 trains the machine learning model at least based on the predicted frame and the second training frame.

In some implementations, generating the predicted video includes: determining, based on the first training frame and the second training frame, respective motion patterns of a set of training objects in the first training frame; and generating the predicted frame, motions of the set of training objects from the first training frame to the predicted frame having the respective motion patterns.

In some implementations, determining the respective motion patterns of the set of training objects comprises: determining, based on the first training frame and the second training frame, a training motion feature characterizing motion from the first training frame to the second training frame; determining the set of training objects in the first training frame by generating a set of training semantic segmentation masks for the first training frame, the set of training semantic segmentation masks indicating respective positions of the set of training objects in the first training frame; performing a same spatial transformation on the training motion feature and the set of training semantic segmentation masks respectively; and determining the respective motion patterns of the set of training objects by performing a partial convolution on the transformed training motion feature and the set of transformed training semantic segmentation masks.

In some implementations, generating the predicted frame includes: determining, based on the respective motion patterns of the set of training objects and the set of training semantic segmentation masks, a combined motion pattern for the first training frame; generating, based on the combined motion pattern and the first training frame, a predicted motion feature for the first training frame by using a convolutional neural network; and generating the predicted frame by performing a warp on the first training frame using the predicted motion feature.

In some implementations, training the machine learning model includes: determining at least one loss function for training the machine learning model; determining a target loss function by performing a weighted summation on the at least one loss function; and training the machine learning model by minimizing the target loss function.

In some implementations, determining a frame loss function based on a difference between the predicted frame and the second training frame; determining a motion feature loss function based on a difference between the predicted motion feature and the training motion feature; and determining a smoothness loss function based on a spatial distribution of the predicted motion feature and a spatial distribution of the predicted frame.

It can be seen from the above that the solution of the training image animation model according to implementations of the subject matter described herein can use the training video to train the machine learning model in a supervised manner without additional annotation work.

Some example implementations of the subject matter described herein are listed below.

In a first aspect, the subject matter described herein provides a computer-implemented method according to claim 1.

In some implementations, generating the output video includes: transferring the motion pattern of the reference object to the target object based on the semantic mapping from the reference object to the target object.

In some implementations, generating the output video includes at least one of the following: transferring, based on a predetermined rule indicating a mapping of the reference object to the target object, the motion pattern of the reference object to the target object; and transferring, based on a mapping of an additional reference object in an additional reference video to an additional target object in the input image, a motion pattern of the additional reference object to the additional target object.

In some implementations, determining the motion pattern of the reference object includes: determining, based on a first frame and a subsequent second frame of the reference video, a first reference motion feature characterizing motion from the first frame to the second frame; determining a first set of reference objects in the first frame by generating a first set of semantic segmentation masks for the first frame, the first set of semantic segmentation masks indicating respective positions of the first set of reference objects in the first frame; performing a partial convolution on the first reference motion feature and the first set of semantic segmentation masks to determine motion patterns of the first set of reference objects.

In some implementations, generating the output video includes: determining at least one object in the input image by generating at least one semantic segmentation mask for the input image, the at least one object including the target object, the at least one semantic segmentation mask indicating a respective position of the at least one object in the input image; determining, based on a respective motion pattern of at least one reference object of the first set of reference objects and the at least one semantic segmentation mask, a combined motion pattern for the input image, by determining a semantic mapping of the at least one reference object to the at least one object; generating, based on the combined motion pattern and the input image, a first predicted motion feature for the input image by using a convolutional neural network; and generating a first output frame, in the output video, following the starting frame by performing a warp on the input image using the first predicted motion feature.

In some implementations, generating the output video further includes: determining, based on the second frame and a subsequent third frame of the reference video, a second reference motion feature characterizing motion from the second frame to the third frame; generating a second set of semantic segmentation masks for the second frame, the second set of semantic segmentation masks indicating respective positions of the first set of reference objects in the second frame; determining second motion patterns of the first set of reference objects by performing a partial convolution on the second reference motion feature and the second set of semantic segmentation masks; and generating a second output frame, in the output video, following the first output frame, motion of the target object from the first output frame to the second output frame having the respective second motion pattern of the reference object of the first set of reference objects.

In a second aspect, the subject matter described herein further provides a computer-implemented method according to claim 7.

In some implementations, generating the predicted video includes: determining, based on the first training frame and the second training frame, respective motion patterns of a set of training objects in the first training frame; and generating the predicted frame, motions of the set of training objects from the first training frame to the predicted frame having the respective motion patterns.

In some implementations, determining the respective motion patterns of the set of training objects comprises: determining, based on the first training frame and the second training frame, a training motion feature characterizing motion from the first training frame to the second training frame; determining the set of training objects in the first training frame by generating a set of training semantic segmentation masks for the first training frame, the set of training semantic segmentation masks indicating respective positions of the set of training objects in the first training frame; performing a same spatial transformation on the training motion feature and the set of training semantic segmentation masks respectively; and determining the respective motion patterns of the set of training objects by performing a partial convolution on the transformed training motion feature and the set of transformed training semantic segmentation masks.

In some implementations, generating the predicted frame includes: determining, based on the respective motion patterns of the set of training objects and the set of training semantic segmentation masks, a combined motion pattern for the first training frame; generating, based on the combined motion pattern and the first training frame, a predicted motion feature for the first training frame by using a convolutional neural network; and generating the predicted frame by performing a warp on the first training frame using the predicted motion feature.

In some implementations, training the machine learning model includes: determining at least one loss function for training the machine learning model; determining a target loss function by performing a weighted summation on the at least one loss function; and training the machine learning model by minimizing the target loss function.

In some implementations, determining a frame loss function based on a difference between the predicted frame and the second training frame; determining a motion feature loss function based on a difference between the predicted motion feature and the training motion feature; and determining a smoothness loss function based on a spatial distribution of the predicted motion feature and a spatial distribution of the predicted frame.

In a third aspect, the subject matter described herein provides an electronic device according to claim 12.

In some implementations, generating the output video includes: transferring the motion pattern of the reference object to the target object based on the semantic mapping from the reference object to the target object.

In some implementations, generating the output video includes at least one of the following: transferring, based on a predetermined rule indicating a mapping of the reference object to the target object, the motion pattern of the reference object to the target object; and transferring, based on a mapping of an additional reference object in an additional reference video to an additional target object in the input image, a motion pattern of the additional reference object to the additional target object.

In some implementations, determining the motion pattern of the reference object includes: determining, based on a first frame and a subsequent second frame of the reference video, a first reference motion feature characterizing motion from the first frame to the second frame; determining a first set of reference objects in the first frame by generating a first set of semantic segmentation masks for the first frame, the first set of semantic segmentation masks indicating respective positions of the first set of reference objects in the first frame; performing a partial convolution on the first reference motion feature and the first set of semantic segmentation masks to determine motion patterns of the first set of reference objects.

In some implementations, generating the output video includes: determining at least one object in the input image by generating at least one semantic segmentation mask for the input image, the at least one object including the target object, the at least one semantic segmentation mask indicating a respective position of the at least one object in the input image; determining, based on a respective motion pattern of at least one reference object of the first set of reference objects and the at least one semantic segmentation mask, a combined motion pattern for the input image, by determining a semantic mapping of the at least one reference object to the at least one object; generating, based on the combined motion pattern and the input image, a first predicted motion feature for the input image by using a convolutional neural network; and generating a first output frame, in the output video, following the starting frame by performing a warp on the input image using the first predicted motion feature.

In some implementations, generating the output video further includes: determining, based on the second frame and a subsequent third frame of the reference video, a second reference motion feature characterizing motion from the second frame to the third frame; generating a second set of semantic segmentation masks for the second frame, the second set of semantic segmentation masks indicating respective positions of the first set of reference objects in the second frame; determining second motion patterns of the first set of reference objects by performing a partial convolution on the second reference motion feature and the second set of semantic segmentation masks; and generating a second output frame, in the output video, following the first output frame, motion of the target object from the first output frame to the second output frame having the respective second motion pattern of the reference object of the first set of reference objects.

In a fourth aspect, the subject matter described herein provides an electronic device according to claim 13.

In some implementations, the subject matter described herein provides a computer program product being tangibly stored in a non-transitory computer storage medium and comprising machine-executable instructions, the machine-executable instructions, when executed by a device, causing the device to perform the method in the first aspect or second aspect.

In a fifth aspect, the subject matter described herein provides a computer program product comprising machine-executable instructions, the machine-executable instructions, when executed by a device, causing the device to perform the method in the first aspect or second aspect.

In some implementations, the subject matter described herein provides a computer readable medium having machine-executable instructions stored thereon, the machine-executable instructions, when executed by a device, causing the device to perform the method in the first aspect or second aspect.

The functionalities described herein can be performed, at least in part, by one or more hardware logic components. As an example, and without limitation, illustrative types of hardware logic components that can be used include field-programmable gate arrays (FPGAs), Application-specific Integrated Circuits (ASICs), application-specific standard products (ASSPs), system-on-a-chip systems (SOCs), complex programmable logic devices (CPLDs), and the like.

Program code for carrying out the methods of the subject matter described herein may be written in any combination of one or more programming languages. The program code may be provided to a processor or controller of a general-purpose computer, special purpose computer, or other programmable data processing apparatus such that the program code, when executed by the processor or controller, causes the functions/operations specified in the flowcharts and/or block diagrams to be implemented. The program code may be executed entirely or partly on a machine, executed as a stand-alone software package partly on the machine, partly on a remote machine, or entirely on the remote machine or server.

In the context of this disclosure, a machine-readable medium may be any tangible medium that may contain or store a program for use by or in connection with an instruction execution system, apparatus, or device. The machine-readable medium may be a machine-readable signal medium or a machine-readable storage medium. A machine-readable medium may include but is not limited to an electronic, magnetic, optical, electromagnetic, infrared, or semiconductor system, apparatus, or device, or any suitable combination of the foregoing. More specific examples of

**EP 4 323 966 B1**

the machine-readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations are performed in the particular order shown or in sequential order, or that all illustrated operations are performed to achieve the desired results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in a single implementation may also be implemented in multiple implementations separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

**Claims**

1. A computer-implemented method for generating an output video (190) based on an input image (170) and a reference video (171) using a trained machine learning model, comprising:

    receiving the input image (170) and the reference video (171), wherein the input image (170) comprises a target object and the reference video (171) comprises a reference object;
    determining, based on the reference video (171), a motion pattern (230) of the reference object in the reference video (171); and
    generating the output video (190) with the input image (170) as a starting frame, wherein motion of the target object in the output video (190) has the motion pattern (230) of the reference object.

2. The method of claim 1, wherein generating the output video (190) comprises:
    transferring, based on a semantic mapping of the reference object to the target object, the motion pattern (230) of the reference object to the target object.

3. The method of claim 1, wherein generating the output video (190) comprises at least one of the following:

    transferring, based on a predetermined rule indicating a mapping of the reference object to the target object, the motion pattern (230) of the reference object to the target object; and
    transferring, based on a mapping of an additional reference object in an additional reference video (171) to an additional target object in the input image (170), a motion pattern (230) of the additional reference object to the additional target object.

4. The method of claim 1, wherein determining the motion pattern (230) of the reference object comprises:

    determining, based on a first frame (171-1) and a subsequent second frame (171-2) of the reference video (171), a first reference motion feature characterizing motion from the first frame (171-1) to the second frame (171-2);
    determining a first set of reference objects in the first frame (171-1) by generating a first set of semantic segmentation masks (220) for the first frame (171-1), the first set of semantic segmentation masks (220) indicating respective positions of the first set of reference objects in the first frame (171-1);
    performing a partial convolution on the first reference motion feature using the first set of semantic segmentation masks (220) to determine motion patterns (230) of the first set of reference objects.

5. The method of claim 4, wherein generating the output video (190) comprises:

    determining at least one object in the input image (170) by generating at least one semantic segmentation mask for the input image (170), the at least one object including the target object, the at least one semantic segmentation mask indicating a respective position of the at least one object in the input image (170);

**14**

determining, based on a respective motion pattern (230) of at least one reference object of the first set of reference objects and the at least one semantic segmentation mask, a combined motion pattern (230) for the input image (170), by determining a semantic mapping of the at least one reference object to the at least one object;

generating, based on the combined motion pattern (230) and the input image (170), a first predicted motion feature for the input image (170) by using a convolutional neural network; and

generating a first output frame (190-1), in the output video (190), following the starting frame by performing a warp on the input image (170) using the first predicted motion feature.

6. The method of claim 5, wherein generating the output video (190) further comprises:

determining, based on the second frame (171-2) and a subsequent third frame of the reference video (171), a second reference motion feature characterizing motion from the second frame (171-2) to the third frame;

generating a second set of semantic segmentation masks for the second frame (171-2), the second set of semantic segmentation masks indicating respective positions of the first set of reference objects in the second frame (171-2);

determining second motion patterns (230) of the first set of reference objects by performing a partial convolution on the second reference motion feature using the second set of semantic segmentation masks; and

generating a second output frame (190-2), in the output video (190), following the first output frame (190-1), motion of the target object from the first output frame (190-1) to the second output frame (190-2) having the respective second motion pattern (230) of the reference object of the first set of reference objects.

7. A computer-implemented method for training a machine learning model for generating an output video (190) based on an input image (170) and a reference video (171), comprising:

obtaining a training video including a first training frame and a subsequent second training frame;

generating a predicted video for the training video by using the machine learning model, motion of an object in the predicted video having a motion pattern (230) of the object in the training video, and the predicted video including the first training frame and a subsequent predicted frame corresponding to the second training frame; and

training the machine learning model at least based on the predicted frame and the second training frame.

8. The method of claim 7, wherein generating the predicted video comprises:

determining, based on the first training frame and the second training frame, respective motion patterns (230) of a set of training objects in the first training frame; and

generating the predicted frame, motions of the set of training objects from the first training frame to the predicted frame having the respective motion patterns (230).

9. The method of claim 8, wherein determining the respective motion patterns (230) of the set of training objects comprises:

determining, based on the first training frame and the second training frame, a training motion feature characterizing motion from the first training frame to the second training frame;

determining the set of training objects in the first training frame by generating a set of training semantic segmentation masks for the first training frame, the set of training semantic segmentation masks indicating respective positions of the set of training objects in the first training frame;

performing a same spatial transformation on the training motion feature and the set of training semantic segmentation masks respectively; and

determining the respective motion patterns (230) of the set of training objects by performing a partial convolution on the transformed training motion feature using the set of transformed training semantic segmentation masks.

10. The method of claim 9, wherein generating the predicted frame comprises:

determining, based on the respective motion patterns (230) of the set of training objects and the set of training semantic segmentation masks, a combined motion pattern (230) for the first training frame;

generating, based on the combined motion pattern (230) and the first training frame, a predicted motion feature for the first training frame by using a convolutional neural network; and

generating the predicted frame by performing a warp on the first training frame using the predicted motion feature.

11. The method of claim 10, wherein training the machine learning model comprises:

> determining at least one loss function for training the machine learning model;
> determining a target loss function by performing a weighted summation on the at least one loss function; and
> training the machine learning model by minimizing the target loss function.

12. An electronic device, comprising:

> a processing unit; and
> a memory coupled to the processing unit and having instructions stored thereon, the instructions, when executed by the processing unit, causing the device to perform the method of claim 1.

13. An electronic device, comprising:

> a processing unit; and
> a memory coupled to the processing unit and having instructions stored thereon, the instructions, when executed by the processing unit, causing the device to perform acts of:
>
>> obtaining a training video including a first training frame and a subsequent second training frame;
>> generating a predicted video for the training video by using a machine learning model, motion of an object in the predicted video having a motion pattern of the object in the training video, and the predicted video including the first training frame and a subsequent predicted frame corresponding to the second training frame; and
>> training the machine learning model at least based on the predicted frame and the second training frame.

14. A computer program product comprising machine-executable instructions which, when executed by a device, cause the device to perform the method of claim 1.

15. A computer program product comprising machine-executable instructions which, when executed by a device, cause the device to perform acts of:

> obtaining a training video including a first training frame and a subsequent second training frame;
> generating a predicted video for the training video by using a machine learning model, motion of an object in the predicted video having a motion pattern (230) of the object in the training video, and the predicted video including the first training frame and a subsequent predicted frame corresponding to the second training frame; and
> training the machine learning model at least based on the predicted frame and the second training frame.

**Patentansprüche**

1. Computerimplementiertes Verfahren zum Erzeugen eines Ausgabevideos (190) auf der Grundlage eines Eingabebildes (170) und eines Referenzvideos (171) unter Verwendung eines trainierten Modells für maschinelles Lernen, mit:

> Empfangen des Eingabebildes (170) und des Referenzvideos (171), wobei das Eingabebild (170) ein Zielobjekt und das Referenzvideo (171) ein Referenzobjekt enthält;
> Bestimmen eines Bewegungsmusters (230) des Referenzobjekts in dem Referenzvideo (171) auf der Grundlage des Referenzvideos (171); und
> Erzeugen des Ausgabevideos (190) mit dem Eingabebild (170) als Startbild, wobei die Bewegung des Zielobjekts in dem Ausgabevideo (190) das Bewegungsmuster (230) des Referenzobjekts aufweist.

2. Verfahren nach Anspruch 1, wobei das Erzeugen des Ausgabevideos (190) umfasst:
Übertragen des Bewegungsmusters (230) des Referenzobjekts auf das Zielobjekt auf der Grundlage einer semantischen Zuordnung des Referenzobjekts zu dem Zielobjekt.

3. Verfahren nach Anspruch 1, wobei das Erzeugen des Ausgabevideos (190) umfasst:

> Übertragen des Bewegungsmusters (230) des Referenzobjekts auf das Zielobjekt auf der Grundlage einer vorbestimmten Regel, die eine Zuordnung des Referenzobjekts zu dem Zielobjekt angibt; und/oder
Übertragen eines Bewegungsmusters (230) eines zusätzlichen Referenzobjekts auf ein zusätzliches Zielobjekt auf der Grundlage einer Zuordnung des zusätzlichen Referenzobjekts in einem zusätzlichen Referenzvideo (171) zu einem zusätzlichen Zielobjekt in dem Eingangsbild (170).

4.  Verfahren nach Anspruch 1, wobei das Bestimmen des Bewegungsmusters (230) des Referenzobjekts umfasst:

Bestimmen, basierend auf einem ersten Bildblock (171-1) und einem nachfolgenden zweiten Bildblock (171-2) des Referenzvideos (171), eines ersten Referenzbewegungsmerkmals, das die Bewegung von dem ersten Bildblock (171-1) zu dem zweiten Bildblock (171-2) kennzeichnet;
Bestimmen einer ersten Gruppe von Referenzobjekten in dem ersten Bildblock (171-1) durch Erzeugen einer ersten Gruppe von semantischen Segmentierungsmasken (220) für den erste Bildblock (171-1), wobei die erste Gruppe von semantischen Segmentierungsmasken (220) die jeweiligen Positionen der ersten Gruppe von Referenzobjekten in dem ersten Bildblock (171-1) angibt;
Durchführen einer partiellen Faltung an dem ersten Referenzbewegungsmerkmal unter Verwendung der ersten Gruppe von semantischen Segmentierungsmasken (220), um Bewegungsmuster (230) der ersten Gruppe von Referenzobjekten zu bestimmen.

5.  Verfahren nach Anspruch 4, wobei das Erzeugen des Ausgabevideos (190) umfasst:

Bestimmen mindestens eines Objekts in dem Eingabebild (170) durch Erzeugen mindestens einer semantischen Segmentierungsmaske für das Eingabebild (170), wobei das mindestens eine Objekt das Zielobjekt enthält und die mindestens eine semantische Segmentierungsmaske eine jeweilige Position des mindestens einen Objekts in dem Eingabebild (170) angibt;
Bestimmen eines kombinierten Bewegungsmusters (230) für das Eingabebild (170) auf der Grundlage eines jeweiligen Bewegungsmusters (230) mindestens eines Referenzobjekts aus der ersten Gruppe von Referenzobjekten und der mindestens einen semantischen Segmentierungsmaske, indem eine semantische Zuordnung des mindestens einen Referenzobjekts zu dem mindestens einen Objekt bestimmt wird;
Erzeugen, basierend auf dem kombinierten Bewegungsmuster (230) und dem Eingabebild (170), eines ersten vorhergesagten Bewegungsmerkmals für das Eingabebild (170) unter Verwendung eines neuronalen Faltungsnetzes; und
Erzeugen eines ersten Ausgabebildblocks (190-1) in dem Ausgabevideo (190), das auf das Startbild folgt, durch Ausführen einer Verzerrung an dem Eingabebild (170) unter Verwendung des ersten vorhergesagten Bewegungsmerkmals.

6.  Verfahren nach Anspruch 5, wobei das Erzeugen des Ausgabevideos (190) ferner umfasst:

Bestimmen, basierend auf dem zweiten Bildblock (171-2) und einem nachfolgenden dritten Bildblock des Referenzvideos (171), eines zweiten Referenzbewegungsmerkmals, das die Bewegung von dem zweiten Bildblock (171-2) zu dem dritten Bildblock kennzeichnet;
Erzeugen einer zweiten Gruppe von semantischen Segmentierungsmasken für den zweiten Bildblock (171-2), wobei die zweite Gruppe von semantischen Segmentierungsmasken die jeweiligen Positionen der ersten Gruppe von Referenzobjekten in dem zweiten Bildblock (171-2) angibt;
Bestimmen zweiter Bewegungsmuster (230) der ersten Gruppe von Referenzobjekten durch Ausführen einer partiellen Faltung des zweiten Referenzbewegungsmerkmals unter Verwendung der zweiten Gruppe von semantischen Segmentierungsmasken; und
Erzeugen eines zweiten Ausgabebildblocks (190-2) in dem Ausgabevideo (190), der auf den erste Ausgabebildblock (190-1) folgt, wobei die Bewegung des Zielobjekts von dem ersten Ausgabebildblock (190-1) zu dem zweiten Ausgabebildblock (190-2) das jeweilige zweite Bewegungsmuster (230) des Referenzobjekts der ersten Gruppe von Referenzobjekten aufweist.

7.  Computerimplementiertes Verfahren zum Trainieren eines maschinellen Lernmodells zum Erzeugen eines Ausgabevideos (190) auf der Grundlage eines Eingabebildes (170) und eines Referenzvideos (171), mit:

Erhalten eines Trainingsvideos, das einen ersten Trainingsbildblock und einen darauf folgenden zweiten Trainingsbildblock enthält;
Erzeugen eines vorhergesagten Videos für das Trainingsvideo unter Verwendung des maschinellen Lernmodells, wobei die Bewegung eines Objekts in dem vorhergesagten Video ein Bewegungsmuster (230) des Objekts in dem Trainingsvideo aufweist und das vorhergesagte Video den ersten Trainingsbildblock und einen nachfolgenden vorhergesagten Bildblock enthält, der dem zweiten Trainingsbildblock entspricht; und Trainieren des maschinellen Lernmodells zumindest auf der Grundlage des vorhergesagten Bildblocks und des zweiten Trainingsbildblocks.

**8.** Verfahren nach Anspruch 7, wobei das Erzeugen des vorhergesagten Videos umfasst:

Bestimmen, basierend auf dem ersten Trainingsbildblock und dem zweiten Trainingsbildblock, jeweiliger Bewegungsmuster (230) einer Gruppe von Trainingsobjekten in dem ersten Trainingsbildblock; und Erzeugen des vorhergesagten Bildblocks, wobei Bewegungen der Menge von Trainingsobjekten von dem ersten Trainingsbildblock zu dem vorhergesagten Bildblock die jeweiligen Bewegungsmuster (230) aufweisen.

**9.** Verfahren nach Anspruch 8, wobei das Bestimmen der jeweiligen Bewegungsmuster (230) der Gruppe von Trainingsobjekten umfasst:

Bestimmen, basierend auf dem ersten Trainingsbildblock und dem zweiten Trainingsbildblock, eines Trainingsbewegungsmerkmals, das die Bewegung von dem ersten Trainingsbildblock zu dem zweiten Trainingsbildblock kennzeichnet;
Bestimmen der Gruppe von Trainingsobjekten in dem ersten Trainingsbildblock durch Erzeugen einer Gruppe von semantischen Segmentierungsmasken für den ersten Trainingsbildblock, wobei die Gruppe von semantischen Segmentierungsmasken die jeweiligen Positionen der Gruppe von Trainingsobjekten in dem ersten Trainingsbildblock angibt;
Durchführen einer gleichen räumlichen Transformation entsprechend an dem Trainingsbewegungsmerkmal und der Gruppe von semantischen Trainingssegmentierungsmasken; und
Bestimmen der jeweiligen Bewegungsmuster (230) der Gruppe von Trainingsobjekten durch Durchführen einer partiellen Faltung an dem transformierten Trainingsbewegungsmerkmal unter Verwendung der Gruppe von transformierten semantischen Trainingssegmentierungsmasken.

**10.** Verfahren nach Anspruch 9, wobei das Erzeugen des vorhergesagten Bildblocks umfasst:

Bestimmen eines kombinierten Bewegungsmusters (230) für den ersten Trainingsbildblock auf der Grundlage der jeweiligen Bewegungsmuster (230) der Gruppe von Trainingsobjekten und der Gruppe von semantischen Trainingssegmentierungsmasken;
Erzeugen eines vorhergesagten Bewegungsmerkmals für den ersten Trainingsbildblock auf der Grundlage des kombinierten Bewegungsmusters (230) und des ersten Trainingsbildblockes unter Verwendung eines neuronalen Faltungsnetzes; und
Erzeugen des vorhergesagten Bildblocks durch Ausführen einer Verzerrung an dem ersten Trainingsbildblock unter Verwendung des vorhergesagten Bewegungsmerkmals.

**11.** Verfahren nach Anspruch 10, wobei das Trainieren des maschinellen Lernmodells umfasst:

Bestimmen mindestens einer Verlustfunktion zum Trainieren des maschinellen Lernmodells;
Bestimmen einer Zielverlustfunktion durch Ausführen einer gewichteten Summierung über die mindestens eine Verlustfunktion; und
Trainieren des maschinellen Lernmodells durch Minimieren der Zielverlustfunktion.

**12.** Elektronisches Vorrichtung, mit:

einer Verarbeitungseinheit; und
einem mit der Verarbeitungseinheit gekoppelten Speicher, auf dem Befehle gespeichert sind, wobei die Befehle, wenn sie von der Verarbeitungseinheit ausgeführt werden, bewirken, dass die Vorrichtung das Verfahren nach Anspruch 1 ausführt.

**13.** Elektronische Vorrichtung, mit:

einer Verarbeitungseinheit; und
einem mit der Verarbeitungseinheit gekoppelten Speicher, auf dem Befehle gespeichert sind, wobei die Befehle, wenn sie von der Verarbeitungseinheit ausgeführt werden, bewirken, dass die Vorrichtung Aktionen ausführt mit:

Erhalten eines Trainingsvideos, das einen ersten Trainingsbildblockrahmen und einen nachfolgenden zweiten Trainingsbildblockrahmen enthält;
Erzeugen eines vorhergesagten Videos für das Trainingsvideo unter Verwendung eines maschinellen Lernmodells, wobei die Bewegung eines Objekts in dem vorhergesagten Video ein Bewegungsmuster des Objekts in dem Trainingsvideo aufweist und das vorhergesagte Video den erste Trainingsbildblock und einen nachfolgenden vorhergesagten Bildblock enthält, der dem zweiten Trainingsbildblock entspricht; und
Trainieren des maschinellen Lernmodells zumindest auf der Grundlage des vorhergesagten Bildblocks und des zweiten Trainingsbildblocks.

14. Computerprogrammprodukt, das maschinenausführbare Befehle umfasst, die, wenn sie von einer Vorrichtung ausgeführt werden, die Vorrichtung veranlassen, das Verfahren nach Anspruch 1 auszuführen.

15. Computerprogrammprodukt, das maschinenausführbare Befehle umfasst, die, wenn sie von einer Vorrichtung ausgeführt werden, die Vorrichtung veranlassen, Aktionen auszuführen mit:

Erhalten eines Trainingsvideos, das einen ersten Trainingsbildblock und einen nachfolgenden zweiten Trainingsbildblock enthält;
Erzeugen eines vorhergesagten Videos für das Trainingsvideo unter Verwendung eines maschinellen Lernmodells, wobei die Bewegung eines Objekts in dem vorhergesagten Video ein Bewegungsmuster (230) des Objekts in dem Trainingsvideo aufweist und das vorhergesagte Video den ersten Trainingsbildblock und einen nachfolgenden vorhergesagten Bildblock umfasst, der dem zweiten Trainingsbildblock entspricht; und
Trainieren des maschinellen Lernmodells zumindest auf der Grundlage des vorhergesagten Bildblocks und des zweiten Trainingsbildblocks.

## Revendications

1. Procédé mis en œuvre par ordinateur permettant de générer une vidéo de sortie (190) sur la base d'une image d'entrée (170) et d'une vidéo de référence (171) à l'aide d'un modèle d'apprentissage automatique entraîné, comprenant :

la réception de l'image d'entrée (170) et de la vidéo de référence (171), dans lequel l'image d'entrée (170) comprend un objet cible et la vidéo de référence (171) comprend un objet de référence ;
la détermination, sur la base de la vidéo de référence (171), d'un schéma de mouvement (230) de l'objet de référence dans la vidéo de référence (171) ; et
la génération de la vidéo de sortie (190) avec l'image d'entrée (170) en tant que trame initiale, dans lequel un mouvement de l'objet cible dans la vidéo de sortie (190) présente le schéma de mouvement (230) de l'objet de référence.

2. Procédé selon la revendication 1, dans lequel la génération de la vidéo de sortie (190) comprend :
le transfert, sur la base d'une mise en correspondance sémantique de l'objet de référence à l'objet cible, du schéma de mouvement (230) de l'objet de référence à l'objet cible.

3. Procédé selon la revendication 1, dans lequel la génération de la vidéo de sortie (190) comprend au moins l'une des opérations suivantes :

le transfert, sur la base d'une règle prédéfinie indiquant une mise en correspondance de l'objet de référence à l'objet cible, du schéma de mouvement (230) de l'objet de référence à l'objet cible ; et
le transfert, sur la base d'une mise en correspondance d'un objet de référence supplémentaire dans une vidéo de référence (171) supplémentaire à un objet cible supplémentaire dans l'image d'entrée (170), d'un schéma de mouvement (230) de l'objet de référence supplémentaire à l'objet cible supplémentaire.

4. Procédé selon la revendication 1, dans lequel la détermination du schéma de mouvement (230) de l'objet de référence comprend :

la détermination, sur la base d'une première trame (171-1) et d'une deuxième trame (171-2) ultérieure de la vidéo de référence (171), d'une première caractéristique de mouvement de référence caractérisant un mouvement de la première trame (171-1) à la deuxième trame (171-2) ;

la détermination d'un premier ensemble d'objets de référence dans la première trame (171-1) par la génération d'un premier ensemble de masques de segmentation sémantique (220) pour la première trame (171-1), le premier ensemble de masques de segmentation sémantique (220) indiquant des positions respectives du premier ensemble d'objets de référence dans la première trame (171-1) ;

la réalisation d'une convolution partielle sur la première caractéristique de mouvement de référence à l'aide du premier ensemble de masques de segmentation sémantique (220) afin de déterminer des schémas de mouvement (230) du premier ensemble d'objets de référence.

**5.** Procédé selon la revendication 4, dans lequel la génération de la vidéo de sortie (190) comprend :

la détermination d'au moins un objet dans l'image d'entrée (170) par la génération d'au moins un masque de segmentation sémantique pour l'image d'entrée (170), l'au moins un objet comportant l'objet cible, l'au moins un masque de segmentation sémantique indiquant une position respective de l'au moins un objet dans l'image d'entrée (170) ;

la détermination, sur la base d'un schéma de mouvement (230) respectif d'au moins un objet de référence du premier ensemble d'objets de référence et de l'au moins un masque de segmentation sémantique, d'un schéma de mouvement (230) combiné pour l'image d'entrée (170), par détermination d'une mise en correspondance sémantique de l'au moins un objet de référence avec l'au moins un objet ;

la génération, sur la base du schéma de mouvement (230) combiné et de l'image d'entrée (170), d'une première caractéristique de mouvement prédite pour l'image d'entrée (170) en utilisant un réseau neuronal à convolution ; et

la génération d'une première trame de sortie (190-1), dans la vidéo de sortie (190), à la suite de la trame initiale par la réalisation d'une distorsion sur l'image d'entrée (170) à l'aide de la première caractéristique de mouvement prédite.

**6.** Procédé selon la revendication 5, dans lequel la génération de la vidéo de sortie (190) comprend en outre :

la détermination, sur la base de la deuxième trame (171-2) et d'une troisième trame ultérieure de la vidéo de référence (171), d'une deuxième caractéristique de mouvement de référence caractérisant un mouvement de la deuxième trame (171-2) à la troisième trame ;

la génération d'un deuxième ensemble de masques de segmentation sémantique pour la deuxième trame (171-2), le deuxième ensemble de masques de segmentation sémantique indiquant des positions respectives du premier ensemble d'objets de référence dans la deuxième trame (171-2) ;

la détermination de deuxièmes schémas de mouvement (230) du premier ensemble d'objets de référence par la réalisation d'une convolution partielle sur la deuxième caractéristique de mouvement de référence à l'aide du deuxième ensemble de masques de segmentation sémantique ; et

la génération d'une deuxième trame de sortie (190-2), dans la vidéo de sortie (190), à la suite de la première trame de sortie (190-1), un mouvement de l'objet cible de la première trame de sortie (190-1) à la deuxième trame de sortie (190-2) présentant le deuxième schéma de mouvement (230) respectif de l'objet de référence du premier ensemble d'objets de référence.

**7.** Procédé mis en œuvre par ordinateur permettant d'entraîner un modèle d'apprentissage automatique pour générer une vidéo de sortie (190) sur la base d'une image d'entrée (170) et d'une vidéo de référence (171), comprenant :

l'obtention d'une vidéo d'entraînement comportant une première trame d'entraînement et une deuxième trame d'entraînement ultérieure ;

la génération d'une vidéo prédite pour la vidéo d'entraînement en utilisant le modèle d'apprentissage automatique, le mouvement d'un objet dans la vidéo prédite présentant un schéma de mouvement (230) de l'objet dans la vidéo d'entraînement, et la vidéo prédite comportant la première trame d'entraînement et une trame prédite ultérieure correspondant à la deuxième trame d'entraînement ; et

l'entraînement du modèle d'apprentissage automatique sur la base au moins de la trame prédite et de la deuxième trame d'entraînement.

**8.** Procédé selon la revendication 7, dans lequel la génération de la vidéo prédite comprend :

la détermination, sur la base de la première trame d'entraînement et de la deuxième trame d'entraînement, de schémas de mouvement (230) respectifs d'un ensemble d'objets d'entraînement dans la première trame d'entraînement ; et

la génération de la trame prédite, des mouvements de l'ensemble d'objets d'entraînement de la première trame d'entraînement à la trame prédite présentant les schémas de mouvement (230) respectifs.

9. Procédé selon la revendication 8, dans lequel la détermination des schémas de mouvement (230) respectifs de l'ensemble d'objets d'entraînement comprend :

la détermination, sur la base de la première trame d'entraînement et de la deuxième trame d'entraînement, d'une caractéristique de mouvement d'entraînement caractérisant un mouvement de la première trame d'entraînement à la deuxième trame d'entraînement ;
la détermination de l'ensemble d'objets d'entraînement dans la première trame d'entraînement par la génération d'un ensemble de masques de segmentation sémantique d'entraînement pour la première trame d'entraînement, l'ensemble de masques de segmentation sémantique d'entraînement indiquant des positions respectives de l'ensemble d'objets d'entraînement dans la première trame d'entraînement ;
la réalisation d'une même transformation spatiale sur la caractéristique de mouvement d'entraînement et l'ensemble de masques de segmentation sémantique d'entraînement, respectivement ; et
la détermination des schémas de mouvement (230) respectifs de l'ensemble d'objets d'entraînement par la réalisation d'une convolution partielle sur la caractéristique de mouvement d'entraînement à l'aide de l'ensemble de masques de segmentation sémantique d'entraînement transformés.

10. Procédé selon la revendication 9, dans lequel la génération de la trame prédite comprend :

la détermination, sur la base des schémas de mouvement (230) respectifs de l'ensemble d'objets d'entraînement et de l'ensemble de masques de segmentation sémantique, d'un schéma de mouvement (230) combiné pour la première trame d'entraînement ;
la génération, sur la base du schéma de mouvement (230) combiné et de la première trame d'entraînement, d'une caractéristique de mouvement prédite pour la première trame d'entraînement en utilisant un réseau neuronal à convolution ; et
la génération de la trame prédite par la réalisation d'une distorsion sur la première trame d'entraînement à l'aide de la caractéristique de mouvement prédite.

11. Procédé selon la revendication 10, dans lequel l'entraînement du modèle d'apprentissage automatique comprend :

la détermination d'au moins une fonction de coût pour entraîner le modèle d'apprentissage automatique ;
la détermination d'une fonction de coût cible par la réalisation d'une somme pondérée sur l'au moins une fonction de coût ; et
l'entraînement du modèle d'apprentissage automatique par la réduction de la fonction de coût cible à un minimum.

12. Dispositif électronique, comprenant :

une unité de traitement ; et
une mémoire couplée à l'unité de traitement et sur laquelle sont stockées des instructions, les instructions amenant le dispositif, quand elles sont exécutées par l'unité de traitement, à mettre en œuvre le procédé selon la revendication 1.

13. Dispositif électronique, comprenant :

une unité de traitement ; et
une mémoire couplée à l'unité de traitement et sur laquelle sont stockées des instructions, les instructions amenant le dispositif, quand elles sont exécutées par l'unité de traitement, à mettre en œuvre des opérations consistant à :

obtenir une vidéo d'entraînement comportant une première trame d'apprentissage et une deuxième trame d'entraînement ultérieure ;
générer une vidéo prédite pour la vidéo d'entraînement à l'aide du modèle d'apprentissage automatique, un mouvement d'un objet dans la vidéo prédite présentant un schéma de mouvement de l'objet dans la vidéo d'entraînement, et la vidéo prédite comportant la première trame d'entraînement et une trame prédite ultérieure correspondant à la deuxième trame d'entraînement ; et

entraîner le modèle d'apprentissage automatique sur la base au moins de la trame prédite et de la deuxième trame d'entraînement.

14. Produit programme d'ordinateur comprenant des instructions exécutables par machine qui, quand elles sont exécutées par un dispositif, amènent le dispositif à mettre en œuvre le procédé selon la revendication 1.

15. Produit programme d'ordinateur comprenant des instructions exécutables par machine qui, quand elles sont exécutées par un dispositif, amènent le dispositif à mettre en œuvre les opérations consistant à :

obtenir une vidéo d'entraînement comportant une première trame d'entraînement et une deuxième trame d'entraînement ultérieure ;
générer une vidéo prédite pour la vidéo d'entraînement en utilisant un modèle d'apprentissage automatique, un mouvement d'un objet dans la vidéo prédite présentant un schéma de mouvement (230) de l'objet dans la vidéo d'entraînement, et la vidéo prédite comportant la première trame d'entraînement et une trame prédite ultérieure correspondant à la deuxième trame d'entraînement ; et
entraîner le modèle d'apprentissage automatique sur la base au moins de la trame prédite et de la deuxième trame d'entraînement.

FIG. 1

**FIG. 2**

# FIG. 3

400

410

OBTAIN AN INPUT IMAGE AND A REFERENCE VIDEO

420

DETERMINE, BASED ON THE REFERENCE VIDEO, A MOTION PATTERN OF A REFERENCE OBJECT IN THE REFERENCE VIDEO

430

GENERATE AN OUTPUT VIDEO WITH THE INPUT IMAGE AS A STARTING FRAME, A MOTION OF A TARGET OBJECT IN THE OUTPUT VIDEO HAVING THE MOTION PATTERN OF THE REFERENCE OBJECT, THE TARGET OBJECT BEING IN THE INPUT IMAGE

# FIG. 4

500

510

OBTAIN A TRAINING VIDEO INCLUDING A FIRST TRAINING FRAME
AND A SUBSEQUENT SECOND TRAINING FRAME

520

GENERATE A PREDICTED VIDEO FOR THE TRAINING VIDEO BY
USING A MACHINE LEARNING MODEL, A MOTION OF AN OBJECT IN
THE PREDICTED VIDEO HAVING A MOTION PATTERN OF THE
OBJECT IN THE TRAINING VIDEO, AND THE PREDICTED VIDEO
INCLUDING THE FIRST TRAINING FRAME AND A SUBSEQUENT
PREDICTED FRAME CORRESPONDING TO THE SECOND TRAINING
FRAME

530

TRAIN THE MACHINE LEARNING MODEL AT LEAST BASED ON THE
PREDICTED FRAME AND THE SECOND TRAINING FRAME

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Animating Landscape: Self-Supervised Learning of Decoupled Motion and Appearance for Single-Image Video Synthesis. **YUKI ENDO et al.** ARXIV.ORG. Cornell University Library, 16 October 2019